# EUROPEAN PATENT APPLICATION

(11) **EP 4 556 729 A1**
(43) Date of publication of application: **21.05.2025**
(21) Application number: 24212420.4
(22) Date of filing: 12.11.2024
(51) Int. Cl.: F16C 11/06, B62D 7/16, F16C 23/04, F16C 33/02, F16C 33/78, F16C 35/02, B62D 7/18, F16C 17/10, F16C 17/26, B62D 7/00

(54) **STEERING LEVER ASSEMBLY**

(30) Priority: 15.11.2023 CZ 20230440
(71) Applicant: TATRA TRUCKS a.s., 742 21 Kopnvnice (CZ)
(72) Inventor: Smolka, Radomír, 74258 P íbor (CZ); Pon ík, Jakub, 75601 Hov zí (CZ); Gelnar, Luká, 74213 Studénka (CZ)
(74) Representative: Havlík, Michal

(57) **Abstract**

Steering lever (11) assembly, wherein the steering lever (11) is set on a pin (7), which is, through top and bottom plain bearing, arranged respectively at the top and bottom end of the pin (7), fitted in a sealing fashion respectively in bearing housing (9) and in the steering box (10) and secured to the steering box (10) through bearing housing (9) using bolts (14), wherein the pin (7) has a head (22) and a shank (23), where the head (22) has larger diameter than the shank (23), wherein the plain bearings are made as spherical plain bearings (5, 6).

## Description

### Technical Field

The invention relates to the steering lever assembly, particularly for one or more steered axles with single mount tires, i.e. axles with only one wheel on each side of the axle, and particularly rear axles with single mount tires. The presented invention particularly relates to the steering lever assembly, where the steering lever is set on a pin, which is through top and bottom plain bearing, arranged respectively at the top and bottom end of the pin, fitted in a sealed fashion respectively in the bearing housing and in the steering box, and attached to the steering box through the bearing housing using bolts, wherein the pin has a head and a shank, where the head has larger diameter than the shank.

### Prior Art

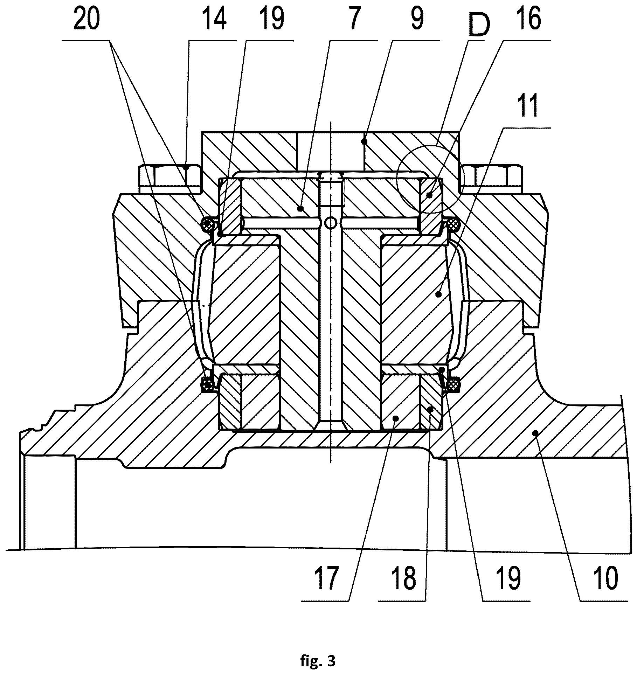

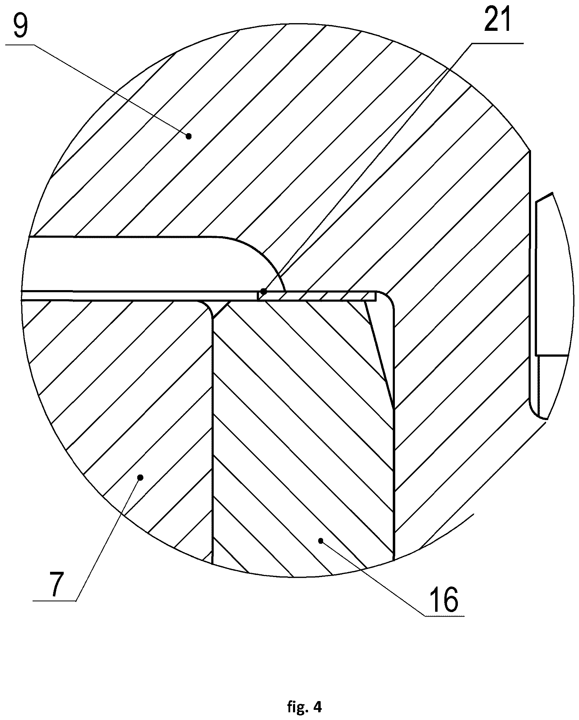

At present, slide fits are most often used for rear steered axles at TATRA chassis, see figs. 3 and 4. Part of the assembly is a pin (7) pressed into the steering lever (11). The top radial plain bearing consists of the head of the pin together with a radial top ring (16), which is pressed into the bearing housing (9). Bottom radial plain bearing consists of two rings (17, 18). The internal ring (17) is pressed onto the shank of the pin and the external ring (18) is pressed into the steering box on the central backbone tube (10). Axial forces are held by two pans (19), where the top one of them is applied under the head of the pin and the bottom one above the internal ring. Adjustment of axial play is done using ground washers (21), which delimit the space between the top ring and bearing housing. The space of steering lever assembly is sealed using two O-rings (20). Lubricating, respective supplementary lubricating of the assembly is done using a grease nipple in the bearing housing. The lubricating grease is conveyed to friction surfaces using a central bore in the pin. The whole assembly is screwed using four bolts (14) to the steering box.

Disadvantage of this solution is inferior sealing. At the ingress of impurities, e.g. owing to teared or worn out O-ring, impurities get into the sliding surfaces of the bearing, which causes jamming of the whole assembly. Another disadvantage is the high number of parts produced.

The solution for the construction group in question is also known from the CZ28777U utility model. But the solution disclosed in there doesn't conform to the requirement of small installation.

Also a steering lever of rear steered axle produced as a class I lever fitted on vertical bearing, is known from DE3741144. Formation of this vertical bearing is not described in this document.

Ball pin, especially for the suspension of wheels of a vehicle, having plain bearings, is known from the document US2018258982. Steering lever assembly using such pin is not described in this quoted document.

### Summary of the Invention

The disadvantages of the above mentioned prior art are solved by a steering lever assembly, where the steering lever is set on a pin, which is through top and bottom plain bearing, arranged respectively at the top and bottom end of the pin, fitted in a sealed fashion respectively in the bearing housing and in the steering box, and attached to the steering box through the bearing housing using bolts, wherein the pin has a head and a shank, where the head has larger diameter than the shank. According to the invention, the plain bearings are manufactured as spherical plain bearings.

An advantageous embodiment of the assembly according to the invention features the pin being placed with its head in the box and with the end of the shank, provided with and end external thread, in the bearing housing, wherein the end of the shank is secured using a nut behind the bearing housing.

Another advantageous embodiment of the assembly according to the invention features the shank being equipped with two cylindrical surfaces, out of which the first cylindrical surface is adapted for fitting the bigger spherical bearing and has larger diameter than the second cylindrical surface, which is adapted for fitting the smaller spherical bearing.

Another advantageous embodiment of the assembly according to the invention features the end of the second cylindrical surface provided with another external thread, which, together with a lock nut arranged on it, and a clamping washer, are adapted for the adjustment of play in the bearings.

Another advantageous embodiment of the assembly according to the invention features cassette gaskets to prevent the ingress of impurities.

The advantage of the presented invention is the possibility of increasing the transferred forces using two maintenance-free spherical plain bearings. The presented solution also reduces manufacturing costs among others by reducing the number of parts of the whole assembly. The presented invention also provides higher quality sealing of the steering lever assembly, or the respective bearings' bodies.

### Overview of the Drawings

The invention will be explained in more detail using a particular example embodiment shown in the drawings, of which
- fig. 1: axonometric view of the installation of a steered rear axle with steering lever,

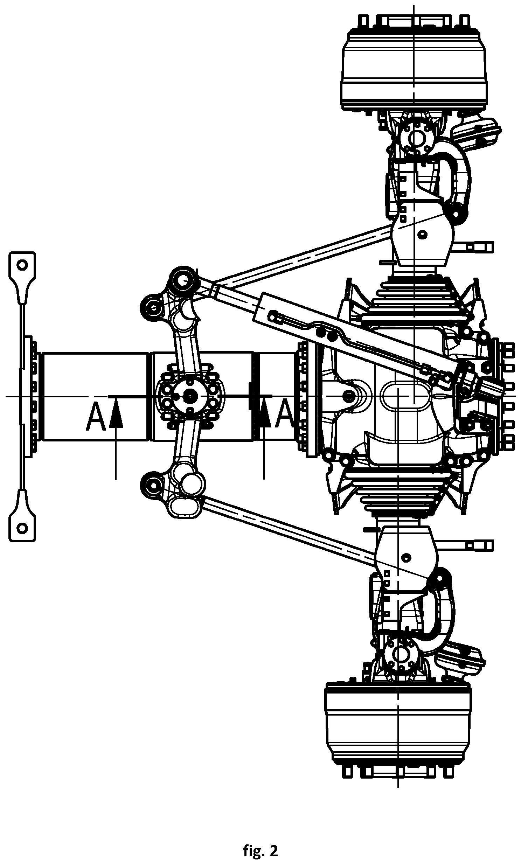

- fig. 2: view of the installation with the hint of section plane A-A, in plan view,
- fig. 3: steering lever assembly according to the state of the art,
- fig. 4: view of the ground washers in detail D from fig. 3,

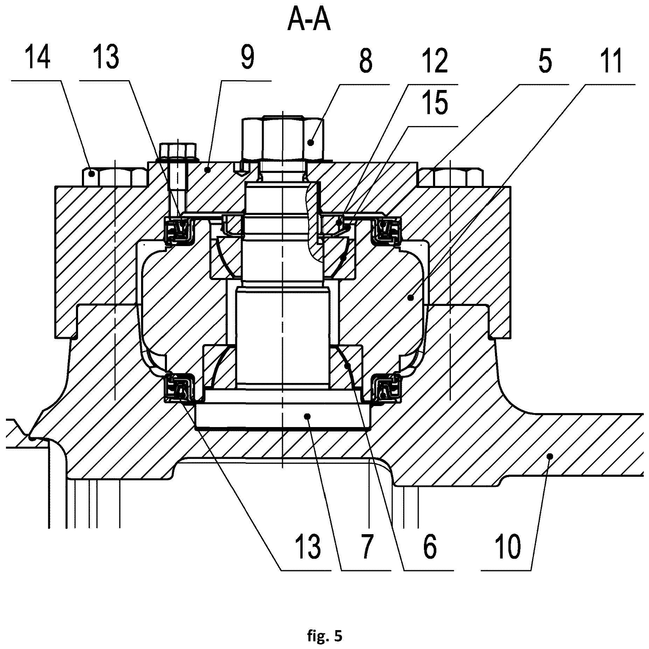

- fig. 5: steering lever assembly according to the invention, and
- fig. 6: pin according to the invention with functional surfaces marked and girder marking of bearings' centres.

### Example Embodiments of the Invention

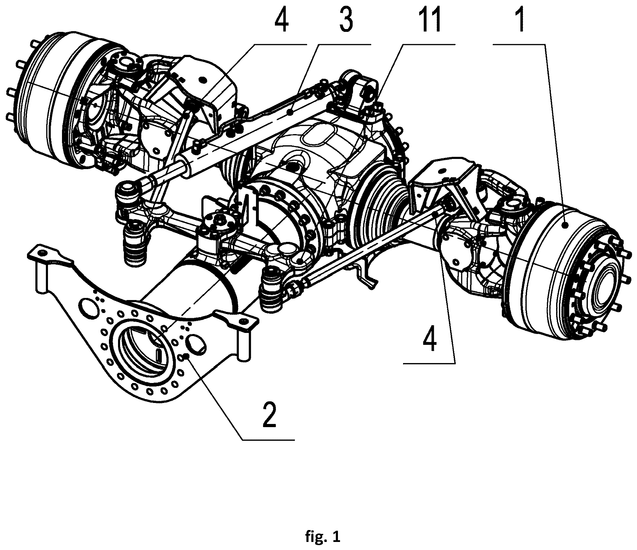

Presented solution of steering lever 11 assembly according to the invention is in this example embodiment applied on rear axle with single mount tires. As shown in fig. 1, presented solution is applied on rear steered axle 1, which is arranged on central backbone tube 2. Onto the tie-rod 4 and thus respective axle 1, is acted by hydraulic cylinder 3 through the steering lever 11.

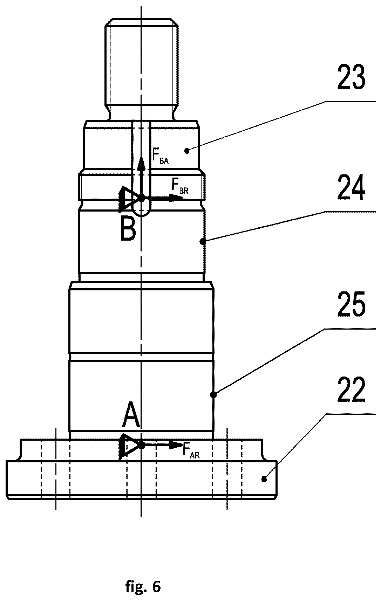

Presented solution uses maintenance-free spherical plain bearings 5, 6 of two sizes. Smaller bearing 5 is pressed onto the upper part of the pin 7 on second cylindrical surface 24 and larger bearing 6 onto the lower part of the pin 7 on first cylindrical surface 25. Both bearings 5, 6 are pressed into the steering lever 11 and allow the transfer of radial forces F_{AR}, F_{BR} and axial forces F_{BA}, see fig. 6. Sliding forces and tilting moments consisting of axial forces F_{BA} and radial forces F_{AR}, F_{BR} on respective arms, are held by the pin 7 inserted into the bearing housing 9 and secured above the bearing housing 9 using a nut 8. Using cylindrical surface 22, the pin 7 is propped in the steering box 10, which makes part of the central backbone tube 2.

Fit in the steering box 10 takes part in holding the radial force F_{AR} in the assembly in the first point A. Adjusting play in the spherical bearings 5, 6 is done using lock nut 12 and clamping washer 15. The full installation group, i.e. bearing housing 9, bearings 5, 6 and steering lever 11, is fixed in the steering box 10 of the central backbone tube 2 using four bolts 14. Bearings 5, 6 are protected against the ingress of impurities by a pair of cassette gaskets 13.

Sliding forces and tilting moments are transferred from the steering lever 11 onto bearings 5, 6, further to the pin 7. Another radial force F_{BR} in second point B is held by the first cylindrical surface 24 of the shank 23 and axial force in second point B is transferred by annular area into the bearing housing 9.

This arrangement according to the invention will increase bearing capacity and prolong the service life of the steering lever 11 assembly. It will also, thanks to the better sealing and use of maintenance-free mearings 5, 6 remove or at least considerably reduce maintenance requirements.

Although the present invention was further described in connection with certain advantageous embodiments, it is not the purpose of this description to limit its scope to such described embodiments only. On the contrary, the aim of this description is to comprise and cover all alternatives, modifications and equivalents of such embodiments, which belong to the subject-matter and claimed scope of the presented invention, as defined in attached claims.

Both above mentioned and further mentioned features according to the invention could be used individually as stand-alone, or in any mutual combinations, if not otherwise stated or if there is no clear contradiction in the context.

References stated in dependent claims refer to other embodiments of the subject-matter of the independent claim using the features of the respective dependent claim. But they don't mean resignation on reaching independent, objective protection for the features of these dependent claims.

The invention thus isn't limited to the embodiment described, and a person skilled in the art can embody the details of the invention using many adaptations within the scope of the attached claims.

### List of Reference Numerals

- 1: axle
- 2: central backbone tube
- 3: hydraulic cylinder
- 4: tie-rod
- 5: smaller bearing
- 6: larger bearing
- 7: pin
- 8: nut
- 9: bearing housing
- 10: steering box
- 11: steering lever
- 12: lock nut
- 13: cassette gasket
- 14: bolt
- 15: clamping washer
- 16: top ring
- 17: internal ring
- 18: external ring
- 19: pan
- 20: O-ring
- 21: ground washer
- 22: head
- 23: shank
- 24: second cylindrical surface
- 25: first cylindrical surface
- A: first point
- B: second point
- F_{AR}: radial force in point A
- F_{BA}: axial force
- F_{BR}: radial force in point B

## Claims

1. Steering lever (11) assembly, wherein the steering lever (11) is set on a pin (7), which is, through top and bottom plain bearing, arranged respectively at the top and bottom end of the pin (7), fitted in a sealing fashion respectively in bearing housing (9) and in the steering box (10) and secured to the steering box (10) through bearing housing (9) using bolts (14), wherein the pin (7) has a head (22) and a shank (23), where the head (22) has larger diameter than the shank (23), ***characterised in that*** the plain bearings are made as spherical plain bearings (5, 6).

2. Assembly according to claim 1, ***characterised in that*** the pin (7) is placed with its head in the box (10) and the end of the shank (23), provided with an end external thread, in the bearing housing (9), wherein the end of the shank (23) is, behind the bearing housing (9), secured using a nut (8).

3. Assembly according to claim **1** or **2, *characterised in that*** the shank (23) is provided with two cylindrical surfaces (24, 25), out of which the first cylindrical surface (25) is adapted for placing the larger spherical bearing (6) and it has larger diameter than the second cylindrical surface (24), which is adapted for placing the smaller spherical bearing (5).

4. Assembly according to anyone of claims 1 to 3, ***characterised in that*** the end of the second cylindrical surface (24) is provided with another external thread, which is, together with a lock nut (12) and clamping washer (15) arranged on it, adapted for adjusting the play in the bearings (5, 6).

5. Assembly according to anyone of claims 1 to 4, ***characterised in that*** the bearings (5, 6) have cassette gaskets (13) allocated to prevent the ingress of impurities.
